# EUROPÄISCHE PATENTSCHRIFT

(11) **EP 0 369 222 B1**
(45) Veröffentlichungstag und Bekanntmachung des Hinweises auf die Patenterteilung: **13.01.1993**
(21) Anmeldenummer: 89119903.6
(22) Anmeldetag: 26.10.1989
(51) Int. Cl.: B60T 17/18, B60T 15/22, B60T 13/26

(54) **Überwachungsventil für Steuerventile, insbesondere für Anhängersteuerventile in Bremsanlagen von Nutzfahrzeugen**
Monitoring valve for control valves, especially for trailer control valves in brake systems of utility vehicles
Soupape de protection pour valves de commande notamment pour valves de commande des remorques dans les systèmes de freinage des véhicules utilitaires

(30) Priorität: 18.11.1988 DE 3839111
(43) Veröffentlichungstag der Anmeldung: 23.05.1990
(73) Patentinhaber: KNORR-BREMSE AG, 80710 München (DE)
(72) Erfinder: Fuchs, Christian, D-8042 Oberschleissheim (DE); Tischler, Karl Heinz, D-8000 München 40 (DE)

(56) Entgegenhaltungen:
- EP-A- 0 169 303
- DE-A- 2 419 755
- FR-A- 2 270 131

## Beschreibung

Die Erfindung betrifft ein Überwachungsventil nach dem Gattungsbegriff des Anspruches 1.

Bei Steuerventilen in Bremsanlagen von Fahrzeugen, insbesondere bei Anhängersteuerventilen für die Bremsanlagen von Nutzfahrzeugen, ist im Übervachungsventil ein hubabhängig wirkender Stößel vorgesehen, welcher bei Ausfall der Ahhängerbremsleitung in einen Querschnitt der vom Zugfahrzeug zum Anhänger führenden Vorratsleitung eintaucht und hierdurch eine Drosselstelle bildet (DE-AS 24 19 755). Bei Überwachungsventilen dieser Art kann es bei längerer Nichtbetätigung, d.h. bei Ausbleiben der eigentlichen Not- bzw. Abreißfunktion dazu kommen, da die am den Stößel tragenden Kolben beindliche Dichtung gegenüber der Innenwand des Ventilgehäuses haften bleibt, ein Zustand, welcher gerade bei derartigen Notbremseinrichtungen äußerst unerwünscht ist.

Davon ausgehend besteht die Aufgabe der Erfindung darin, ein Überwachungsventil der gattungsgemäßen Art so auszugestalten, daß ein Festhaften der Dichtungen am Ventilgehäuse absolut sicher verhindert wird, die Funktionsfähigkeit des Überwachungsventils, sei es als Drosselventil, sei es als Sperrventil, soll also immer gewährleistet sein. Diese Möglichkeit der Festhaftverhinderung soll mit baulich einfachen Mitteln erreicht werden.

Zur Lösung dieser Aufgabe dienen die Merkmale nach dem Kennzeichnungsteil des Patentanspruches 1.

Das Überwachungsventil arbeitet mit zeitlicher Verzögerung, welche den Reaktionsdruck an der Gegenseite des Kolbens des Überwachungsventils erst dann zur Wirkung gelangen läßt, nachdem der Kolben einschließlich des den Kolben tragenden Stößels eine Mindeststrecke bewegt wurde. Hierdurch wird erreicht, daß sämtliche Dichtungen des Ventilsystems einer gewissen Bewegung ausgesetzt sind, ein Festhaften wird also absolut sicher verhindert. Die zeitliche Verzögerung wird durch ein Anschlagsystem erreicht, d.h. durch ein in sich geschlossenes, mit dem Stößel verfahrbares Kolbensystem, innerhalb welchem der ausgesteuerte Druck des Anhängersteuerventils erst dann am Kolben zur Wirkung gelangt, wenn der Gegenkolben ausgeschaltet, also am Anschlag des Gehäuses angelegt ist.

Eine vorteilhafte Ausgestaltung sieht zur Erzielung des gleichen Ergebnisses vor, daß der zwischen dem Kolben und dem Gegenkolben bestehende Raum mit Außenluft in Verbindung steht, während der Gegenkolben an seiner Unterseite durch den ausgesteuerten Druck des Anhängersteuerventils beaufschlagbar ist und bei Druckbeaufschlagung dem Kolben des Überwachungsventils entgegenfährt. Die an der Unterseite des Gegenkolbens wirkende Kraft kommt als Gegenkraft am Kolben erst dann zur Wirkung, wenn der Gegenkolben sich an den Kolben angelegt hat. Auch hier ist durch passende Dimensionierung der Wegstrecken, der Federkräfte und der Flächenverhältnisse sichergestellt, daß bei jeder Betätigung des Anhängersteuerventils eine Zwangsbewegung des Kolbens im Überwachungsventil stattfindet, d.h. ein Festhaften der Dichtungen im Überwachungsventilsystem ist verhindert.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
Fig.1 ist eine Längsschnittansicht durch ein Überwachungsventil mit einer Vorrichtung zur Festhaftverhinderung gemäß der Erfindung; und
Fig.2 und 3 sind der Fig.1 vergleichbare Schnittansichten von weiteren Ausführungsformen des Überwachungsventils mit einer erfindungsgemäßen Vorrichtung zur Festhaftverhinderung.

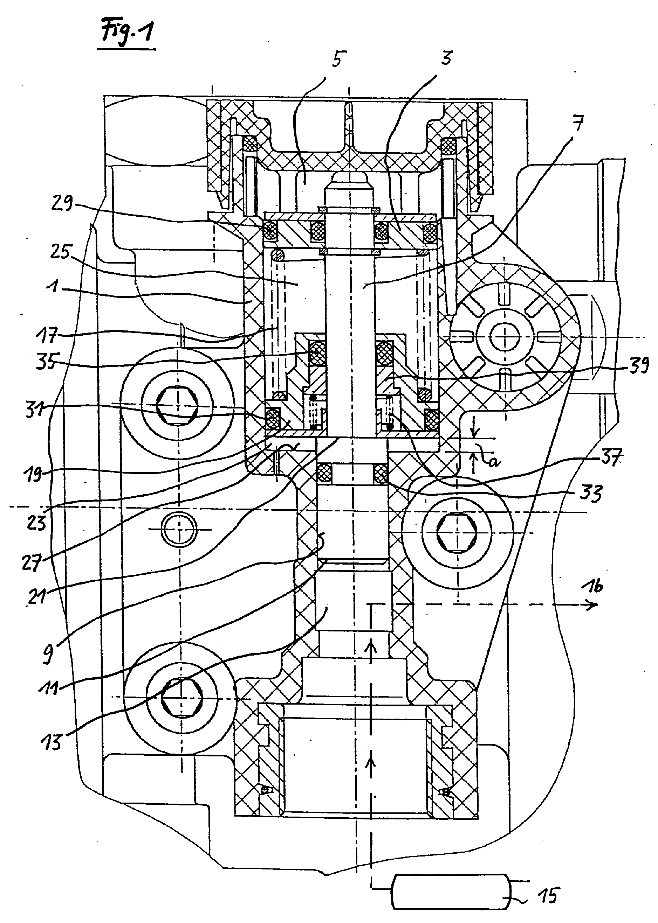

Das in Fig.1 dargestellte Drosselventil, an welchem die erfindungsgemäße Festhaftverhinderung verwirklicht ist, kann als baulicher Bestandteil eines Anhängersteuerventils ausgebildet sein, welches in der Zeichnung als Träger des Drosselventils teilweise wiedergegeben ist. Das Drossel- bzw. Sperrventil weist in einem Gehäuse 1 einen Kolben 3 auf, welcher vom durch das Anhängersteuerventil eingesteuerten Druck in einer Kammer 5 beaufschlagbar ist. Der Kolben 3 wird von einem Stößel 7 getragen, welcher sich unter Abdichtung in eine Bohrung 9 erstreckt und mit seinem unteren Ende 11 eine Drosselstelle 13 überwacht, welche sich in der Verbindung zwischen einem Druckluftvorrat 15, einem Drucklufteinlaß (nicht dargestellt) des Anhängersteuerventils und in weiterer Folge mit der Anhängervorratsleitung 16 in Verbindung steht. Eine Feder 17 stützt sich zwischen dem Kolben 3 und einem gleichfalls vom Stößel 7 getragenen Gegenkolben 19 ab; letzterer liegt in der Ausgangsstellung des Drosselventils an einer als Anschlag wirkenden Schulter 21 des Stößels an. Auf diese Weise ist die Gesamtheit aus Kolben 3, Stößel 7 und Gegenkolben 19 als eine Gesamtheit um den Abstand a verfahrbar, wenn der Kolben 3 durch den vom Anhängersteuerventil ausgehenden Steuerdruck beaufschlagt ist.

Der Raum 23 unterhalb des Kolbens ist entlüftet, während der Raum 25 zwischen Kolben 3 und Gegenkolben 19 über eine (nicht dargestellte) Verbindung an die den ausgesteuerten Bremsdruck des Anhängersteuerventils führende Kammer angeschlossen ist.

Die Wirkungsweise des vorstehend beschriebenen Drossel- bzw. Sperrventils bei Verwendung der erfindungsgemäßen Festhaftverhinderung ist wie folgt :
Bei Betätigung eines (nicht dargestellten) Betriebsbremsventiles gelangt Druckluft in die Steuerkammer bzw. Steuerkammern des Anhängersteuerventils und gleichzeitig in die Kammer 5.

Der Kolben 3, der den Kolben tragende Stößel 7 und der Gegenkolben 19 werden folglich um den Betrag a als Gesamtheit nach unten gerichtet verschoben, bis der Gegenkolben 19 am Boden 27 des Raumes aufliegt. Während der vorbeschriebenen Beaufschlagung der Kammer 5 mit dem Steuerdruck des Anhängersteuerventils wird dessen ausgesteuerter Anhängerbremsdruck durch die (nicht dargestellte) Leitungsverbindung in den Raum 25 eingeleitet. In der dargestellten Lage des Drossel- bzw. Sperrventils wirkt dieser Druck innerhalb des Raumes 25 auf die zugewandten Kolbenflächen des Kolbens 3 und des Gegenkolbens 19, wodurch ein Kräftegleichgewicht existiert. Der in den Raum 25 eingeleitete Druck aus dem Anhängersteuerventil kommt erst dann als Reaktionsdruck gegenüber dem Kolben 3 zur Wirkung, wenn sich der Gegenkolben 19 auf den Boden 27 des Gehäuses 1 aufgesetzt hat, d.h. der Druck innerhalb des Raumes 25 als auch die Kraft der Feder 17 wirken gegenüber dem Kolben 3, so daß sich ein Gleichgewichtszustand einstellen kann. Die vorstehend beschriebene Verschiebung des Kolben 3 und des Stößels 7 geschieht auch gegen den an der Unterseite des Stößels einwirkenden Druck des Druckluftvorrats, wobei jedoch infolge der bestehenden Flächenverhältnisse diese Verschiebung ermöglicht ist.

Bei jeder Betätigung des Anhängersteuerventils ist somit eine Verschiebung des Kolbens 3 und der von ihm getragenen Dichtung 29, eine Verschiebung des Kolbens 19 und der von ihm getragenen Dichtung 31 als auch eine Verschiebung der Dichtung 33 am unteren Ende des Stößels sichergestellt. Ein Festhaften ist hierdurch absolut sicher verhinderbar. Auch die zwischen dem Außenumfang des Stößels 7 und dem Innenumfang des Gegenkolbens 19 befindliche Dichtung 35, welche den Raum 23 gegenüber dem Raum 25 abdichtet, unterliegt einer Zwangsbewegung, da sie bei Belüftung des Raumes 25 auf einer Ringfläche dem herrschenden Druck ausgesetzt ist und sich folglich gegen die Kraft der Feder 37 nach unten gerichtet verschieben läßt. Die Feder 37 stützt sich zweckmäßigerveise an einem Ring 39 ab, welcher zusammen mit der Dichtung 35 verschiebbar ist. Somit ist sichergestellt, daß sämtliche Dichtungen, welche im vorliegenden Fall als O-Dichtungen ausgeführt sind, einer Zwangsbewegung unterliegen, wenn das Anhängersteuerventil in bekannter Weise aktiviert wird. Ein Festsetzen der Dichtungen ist absolut wirksam ausgeschaltet, die Funktionsfähigkeit des Absperr- und Drossel ventils bleibt somit sichergestellt, selbst wenn dieses nie oder so gut wie nie benutzt werden sollte.

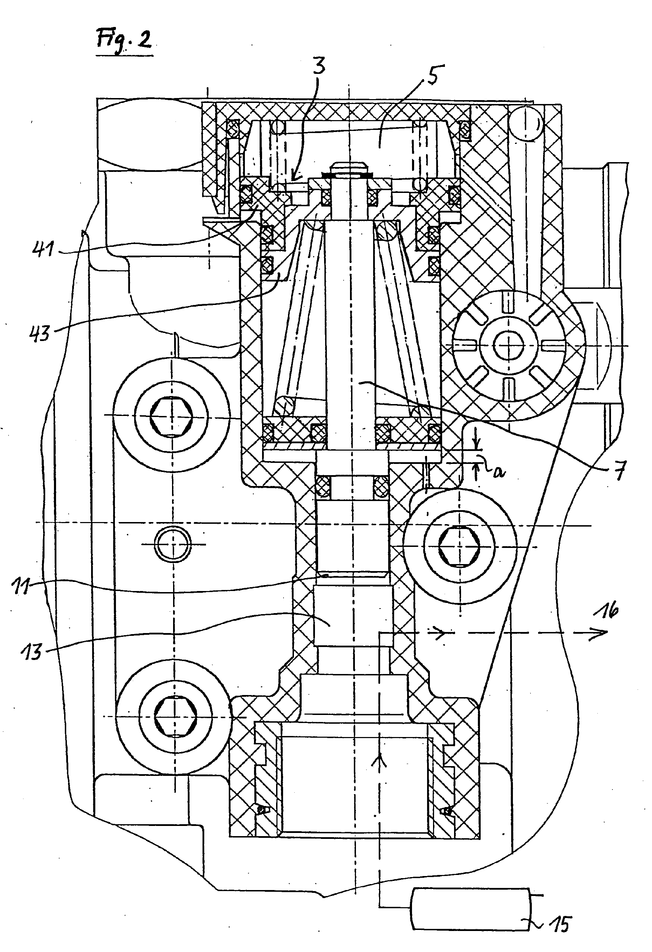

Bei der in Fig.2 wiedergegebenen Ausführungsform ist der Kolben 3 zweiteilig ausgeführt und besteht aus den Kolbenabschnitten 41 und 43. Die beiden Kolbenabschnitte bilden einen Stufenkolben, dessen größere Gesamtfläche bei Druckbeaufschlagung der Kammer 5 zunächst wirksam ist, bis sich der Kolbenabschnitt 41 am Gehäuse 1 auflegt, wonach der kleinere Kolbenabschnitt 43, d.h. der Kolbenabschnitt 43 von kleinerer Querschnittsfläche bei stehenbleibendem Kolbenabschnitt 41 zur Wirkung kommt. Die Wirkungsweise der Vorrichtung nach Fig.2 entspricht im weiteren derjenigen, wie sie im Zusammenhang mit Fig.1 erläutert wurde; im dargestellten Ausführungsbeispiel ist jedoch auf die für sich gesehen verschiebbare Dichtung 35 verzichtet worden. Natürlich kann auch eine derartige Dichtung bei der Ausführungsform nach Fig.2 zur Anwendung gelangen.

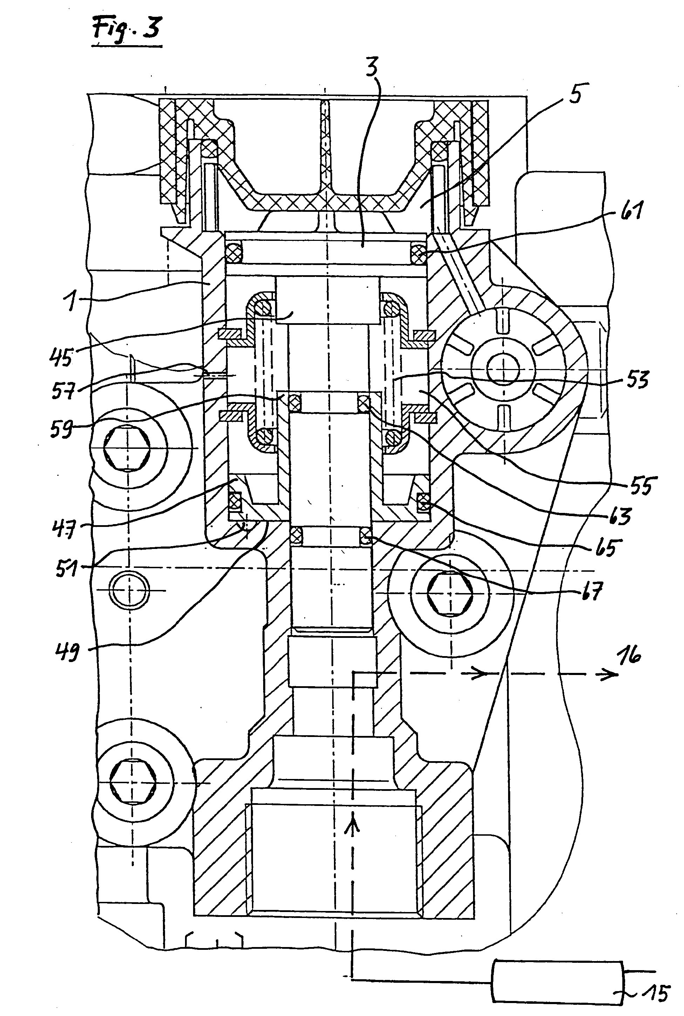

Bei der Ausführungsform nach Fig.3 wird in gleicher Weise mit dem der vorliegenden Erfindung zugrundeliegenden allgemeinen Gedanken gearbeitet, den Reaktionsdruck auf den Kolben 3 erst dann zur Wirkung kommen zu lassen, wenn ausreichend Verschiebebewegung an den Dichtungen existiert, welche ein Festhaften derselben verhindert. Die Konstruktion nach Fig.3 weist wiederum innerhalb eines Gehäuses 1 einen Kolben 3 auf, welcher mit einem Stößel 7 verbunden ist. An der Unterseite des Kolbens 3 befindet sich ein gegenüber dem Durchmesser des Stößels 7 erweiterter, als Anschlag wirkender Bund 45, dessen Fortsetzung in Richtung der Drosselstelle 13 als der im Durchmesser reduzierte Stößel besteht. An bezüglich dem Kolben 3 entgegengesetzter Position befindet sich ein Gegenkolben 47, welcher an seiner Unterseite durch den ausgesteuerten Druck, d.h. durch den Bremsdruck des Anhängersteuerventils beaufschlagbar ist. Der an der Unterseite des Gegenkolbens 47 bestehende Raum 49 ist mittels der in Fig.3 angedeuteten Leitungsverbindung 51 an die den ausgesteuerten Druck des Anhängersteuerventils fuhrende Kammer angeschlossen. Zwischen dem Kolben 3 und dem Gegenkolben 47 befindet sich eine gefesselte Federanordnung 52, gegen welche der Kolben 3 verfahrbar ist. Der zwischen den dem Kolben 3 und dem Gegenkolben bestehende Raum 55 ist im Gegensatz zur Ausführungsform nach den Figuren 1 und 2 nicht mit ausgesteuertem Druck belüftbar, sondern steht über eine Bohrung 57 mit Atmoshphäre in Verbindung. Wie im Falle der vorstehend beschriebenen Ausführungsformen überwacht das untere Ende 11 des Stößels 7 eine Drosselstelle 13, derart, daß bei einem Ausfall des ausgesteuerten Druckes des Anhängersteuerventils der Stößel 7 mit seinem Ende 11 in die Drosselstelle 13 eintaucht und die Verbindung zwischen dem Vorrat und der den Vorratsdruck führenden Kammer im Anhängersteuerventil drosselt oder sperrt.

Die Wirkungsweise der unter Bezugnahme auf Fig.3 beschriebenen Anordnung zur Festhaftverhinderung ist wie folgt :
Bei Druckbeaufschlagung des Kolbens 3 durch Einleiten von Steuerdruck in die Kammer 5 vollzieht sich zunächst eine Abwärtsbewegung des Kolbens 3, welcher lediglich der auf dem begrenzten Querschnitt des Endes 11 einwirkende Vorratsdruck entgegenwirkt. Nach einer vorbestimmten Wegstrecke legt sich die Unterseite des Kolbens 3 an der Oberseite der gefesselten Federanordnung 53 an, derart, daß die weitere Abwärtsbewegung gegen die Gegenkraft der Feder 59 vollzogen wird. Der vom ausgesteuerten Bremsdruck des Anhängersteuerventils an seiner Unterseite beaufschlagte Gegenkolben 47 wird nach oben gerichtet verschoben, bis sein den Stößel 7 umgebendes oberes Ende 59 an die Unterseite des Bundes 45 angelegt ist. Nach anfänglicher Bewegung des Kolbens 3 kommt dieser unter Einwirkung der Gegenkraft der Federanordnung und des Gegenkolbens zum Stillstand. Es wurden folglich die Dichtungen 61,63,65 und 67 am Kolben 3, am Stößel 7 und am Gegenkolben 47 bewegt, d.h. ein Festhaften ist in gleicher Weise verhinderbar, wann immer eine Betätigung des Anhängersteuerventils vorliegt. Im Rahmen des der Erfindung eigenen Gedankens sind auch weitere Ausführungsformen gegeben, bei welchen eine zeitlich verzögerte Gegenkraft, d.h. Reaktionskraft des ausgesteuerten Anhängersteuerventils-Bremsdruckes am Kolben des Überwachungsventils zur Anwendung bzw. Einwirkung gelangt, um absolut sicher ein Festhaften der verschiednen Dichtungen zu vermeiden. Die Funktion der Überwachungsventile vorstehend beschriebener und weiterer Ausführungsformen ist im Notfall nicht beeinträchtigt, d.h. bei Ausbleiben des Reaktionsdruckes und Bruch der Bremsleitung wirkt das Überwachungsventil in bekannter Weise als Abreißventil, derart, daß das untere Ende des Stößels in die Drosselstelle eingeschoben wird.

## Patentansprüche

1. Überwachungsventil für Anhängersteuerventile in Bremsanlagen von Nutzfahrzeugen, zur Überwachung der vom Zugfahrzeug zum Anhänger führenden Vorratsleitung, unter Verwendung eines einen Stößel (7) tragenden Kolbens (3), welcher auf einer Seite vom Druck eines Bremskreises als Steuerdruck und auf der Gegenseite vom Druck der vom Ahhängersteuerventil beschickten Anhängerbremsleitung beaufschlagt ist, wobei das Ende (11) des Stößels (7) bei Druckausfall in der Anhängerbremsleitung und Verschiebung des den Stößel (7) tragenden Kolbens (3) in einer die Vorratsleitung drosselnden oder sperrenden Weise in einen Querschnitt der Vorratsleitung (13) eintaucht, dadurch gekennzeichnet, daß zwischen dem in den Querschnitt der Vorratsleitung eintauchbaren Ende des Stößels (7) und dem am entgegengesetzten Stößelende befindlichen Kolben (3) ein in Ausgangslage an einem Bund des Stößels aufliegender Gegenkolben (19) geführt ist, wobei der Raum (25) zwischen dem Kolben (3) und dem Gegenkolben (19) durch den ausgesteuerten Anhängerbremsleitungsdruck beaufschlagbar ist, und daß der Gegenkolben (19) nach Durchlauf einer Wegstrecke des den Kolben tragenden Stößels (7) an einen Anschlag (27) anlegbar ist, so daß der zwischen den Kolben existierende Anhängerbremsleitungsdruck nachfolgend allein als Reaktionsdruck gegenüber dem Kolben (3) wirkt und diesen auf eine Gleichgewichtslage einstellt.

2. Überwachungsventil nach Anspruch 1, dadurch gekennzeichnet, daß zwischen dem Kolben (3) und dem Gegenkolben (19) eine vorgespannte Feder (17) abgestützt ist, daß der Gegenkolben (19) in Ausgangslage an einem im Durchmesser erweiterten Bund des Stößels (7) anliegt, und daß der Anschlag für den Gegenkolben (19) durch den Boden (27) des die beiden Kolben aufnehmenden Gehäuses (1) gebildet ist, wobei sich der Stößel (7) durch den Boden (27) hindurch in eine Bohrung (9) erstreckt, welche das in den Querschnitt der Vorratsleitung eintauchbare Ende des Stößels aufnimmt.

3. Überwachungsventil nach Anspruch 1 oder 2, dadurch gekennzeichnet, daß die am Innenumfang des Gegenkolbens (19) befindliche, gegenüber dem Außenumfang des Stößels (7) dichtende Dichtung (35) bei Druckbeaufschlagung im Raum (25) gegen die Kraft einer Feder (37) begrenzt beweglich ist.

4. Überwachungsventil nach einem der vorangehenden Ansprüche, dadurch gekennzeichnet, daß der Kolben (3) aus zwei Kolbenabschnitten (41,43) besteht, von welchen der Kolbenabschnitt (41) größeren Durchmessers bei Kolbenbewegung an einen Anschlag anlegbar ist, derart, daß der Kolbenabschnitt (43) kleineren Durchmessers mit dem Stößel (7) in Verbindung bleibt.

5. Überwachungsventil für Anhängersteuerventile in Bremsanlagen von Nutzfahrzeugen, zur Überwachung der vom Zugfahrzeug zum Anhänger führenden Vorratsleitung, unter Verwendung eines einen Stößel (7) tragenden Kolbens (3), welcher auf einer Seite vom Druck eines Bremskreises als Steuerdruck und auf der Gegenseite vom Druck der vom Anhängersteuerventil beschickten Anhängerbremsleitung beaufschlagt ist, wobei das Ende (11) des Stößels (7) bei Druckausfall in der Anhängerbremsleitung und Verschiebung des den Stößel (7) tragenden Kolbens (3) in einer die Vorratsleitung drosselnden oder sperrenden Weise in einen Querschnitt der Vorratsleitung (13) eintaucht, dadurch gekennzeichnet, daß sich zwischen dem in den Querschnitt der Vorratsleitung eintauchbaren Ende des Stößels (7) und dem am anderen Ende getragenen Kolben (3) ein Gegenkolben (47) befindet, welcher am Außenumfang des Stößels unter Abdichtung verschiebbar geführt ist und zusammen mit dem Kolben (3) einen mit der Außenluft in Verbindung stehenden Raum (55) einschließt, wobei der Gegenkolben (47) und der Kolben (3) bei relativer Annäherung zueinander in Anlage miteinander bewegbar sind und sich an der Unterseite des Gegenkolbens (47) ein den ausgesteuerten Druck des Anhängersteuerventils führender Raum (49) befindet, so daß der Kolben (3) bei Druckbeaufschlagung durch den Steuerdruck nach Vollführen einer Zwangsbewegung mit dem vom ausgesteuerten Druck beaufschlagbaren, dem Kolben (3) entgegenlaufenden Gegenkolben (47) in Aulage gelangt.

6. Überwachungsventil nach Anspruch 5, dadurch gekennzeichnet, daß sich zwischen dem Kolben (3) und dem Gegenkolben (47) eine gefesselte Federanordnung (53) befindet, gegen deren Wirkung der Kolben (3) verfahrbar ist.

## Claims

1. Monitoring valve for trailer control valves in brake systems of commercial vehicles for monitoring the supply line leading from the tractive vehicle to the trailer, using a piston (3) bearing a tappet (7) pressurized on one side by the pressure of a brake circuit serving as a control pressure and on the opposite side by the pressure of the trailer brake line fed by the trailer control valve, whereby in the event of pressure failure in the trailer brake line and displacement of the piston (3) bearing the tappet (7) the end (II) of tappet (7) plunges into a section of the supply line (13) in a way that throttles and shuts off the supply line, wherein between the end of tappet (7) capable of plunging into the section of the supply line and the piston (3) located at the opposite end of the tappet, a counterpiston (19) is guided that in initial position bears on a shoulder of the tappet, whereby the chamber (25) between the piston (3) and the counterpiston (19) is able to be pressurized by the outlet trailer brake line pressure, and wherein the counterpiston (19) can come to rest against a stop (27) once the tappet (7) bearing the piston has covered a distance such that the trailer brake line pressure prevailing between the pistons will solely act downstream as a reaction pressure relative to the piston (3) and sets the latter into a balanced position.

2. Monitoring valve according to claim 1, wherein a precompressed spring (17) is supported between the piston (3) and the counterpiston (19), wherein said counterpiston (19) bears in initial position on a shoulder of the tappet (7), said shoulder being enlarged in its diameter, and wherein the stop for the counterpiston (19) is formed by the bottom (27) of the housing (1) accommodating both pistons, whereby the tappet (7) extends through the bottom (27) into a bore (9) which houses the end of the tappet capable of plunging into the section of the supply line.

3. Monitoring valve according to claim 1 or 2, wherein the seal (35) situated at the inner circumference of the counterpiston (19) sealing relative to the outer circumference of the tappet (7) is moveable in a restricted way against the force of a spring (37) if the chamber (25) is pressurized.

4. Monitoring valve according to one of the above claims, wherein the piston (3) consists of two piston sections (41, 43), whose piston section (41) of larger diameter is able to apply against a stop as the piston moves such that the piston section (43) of smaller diameter remains in connection with the tappet (7).

5. Monitoring valve for trailer control valves in brake systems of commercial vehicles for monitoring the supply line leading from the tractive vehicle to the trailer, using a piston (3) bearing a tappet (7) pressurized on one side by the pressure of a brake circuit as control pressure and on the opposite side by the pressure of the trailer brake line fed by the trailer control valve, whereby in the event of pressure failure in the trailer brake line and displacement of the piston (3) bearing the tappet (7) the end (II) of tappet (7) plunges into a section of the supply line (13) in a way that throttles and shuts off the supply line, wherein between the end of piston (7) capable of plunging into the section of the supply line and the piston (3) borne at the other end, a counterpiston (7) is located, which is guided in a moveable sealed way at the outer circumference of the tappet and that, together with the piston (3) includes a chamber (55) communicating with atmosphere, whereby the counterpiston (47) and the piston (3) are capable, in case of relative approach, of jointly moving when coming to a stop against each other and wherein on the underside of the counterpiston (47) there is a chamber (49) conducting the outlet pressure of the trailer control valve such that, in the event of pressurization by control pressure, the piston (3), after having effected a forced movement, comes to a stop against the counterpiston (47) capable of being pressurized by the outlet pressure and acting in opposite direction to the piston (3).

6. Monitoring valve according to claim 5, wherein a captivated spring arrangement (53) is lodged between the piston (3) and the counterpiston (47), against whose action the piston (3) is capable of being displaced.

## Revendications

1. Valve de contrôle pour des soupapes de commande de rem.orques dans des installations de freinage de véhicules utilitaires, en vue de contrôler la conduite de réserve menant du véhicule tracteur à la remorque, avec mise en oeuvre d'un piston (3) qui porte un poussoir (7), et qui est chargé sur un de ses côtés par la pression d'un circuit de freinage, agissant comme pression de commande, et sur le côté opposé par la pression de la conduite de freinage de la remorque, alimentée par la soupape de commande de la remorque, l'extrémité (11) du poussoir (7) plongeant, dans le cas où la pression fait défaut dans la conduite de freinage de la remorque et dans le cas du déplacement du piston (3) qui porte le poussoir (7), dans une section transversale de la conduite de réserve (13), dans le sens d'un étranglement ou de l'obturation de la conduite de réserve (13), caractérisée par le fait qu'entre l'extrémité du poussoir (7) qui est susceptible de plonger dans la section transversale de la conduite de réserve et le piston (3) qui se trouve à l'extrémité opposée du poussoir, est guidé un piston antagoniste (19) qui, dans la position de départ, porte contre une collerette du poussoir, la chambre (25), située entre le piston (3) et le piston antagoniste (19), étant susceptible d'être chargée par la pression qui a été ajustée dans la conduite de freinage de la remorque, et que le piston antagoniste (19) est susceptible, après que le poussoir (7) qui porte le piston (7) ait accompli une course, de porter contre une butée, en sorte que la pression qui règne dans la conduite de freinage de la remorque et qui est présente entre les pistons agit ensuite et seule comme pression de réaction par rapport au piston (3) et ajuste ce dernier dans une position d'équilibre.

2. Valve de contrôle selon la revendication 1, caractérisée par le fait qu'entre le piston (3) et le piston antagoniste (19) est prévu un ressort préarmé (17), que dans sa position de départ, le piston antagoniste (19) porte contre une collerette du poussoir (7), qui présnte un diamètre agrandi, et que la butée pour le piston antagoniste (19) est constituée par le fond du carter (1) qui reçoit les deux pistons, le poussoir (7) passant à travers le fond (27), dans un perçage qui reçoit l'extrémité du poussoir qui est susceptible de plonger dans la section transversale de la conduite de réserve.

3. Valve de contrôle sleon la revendication 1 ou 2, caractérisée par le fait que le moyen d'étanchéité situé au niveau de la périphérie intérieure du piston antagoniste (19) et assurant l'étanchéité du côté de la périphérie extérieure du poussoir (7), est, dans le cas de la charge en pression de la chambre (26), capable de déplacements limités, à l'encontre de la force d'un ressort (37).

4. Valve de contrôle selon l'une des revendications précédentes, caractérisée par le fait que le piston (3) est constitué par deux sections de piston (41,43), dont la section de piston (41) de plus grand diamètre est susceptible, dans le cas du déplacement du piston, de porter contre une butée, de manière que la section de piston (43) de plus petit diamètre conserve sa liaison avec le piston (7).

5. Valve de contrôle pour des soupapes de commande de remorques dans des installations de freinage de véhicules utilitaires, en vue de contrôler la conduite de réserve menant du véhicule tracteur à la remorque, avec mise en oeuvre d'un piston (3) qui porte un poussoir (7), et qui est chargé sur un de ses côtés par la pression d'un circuit de freinage, agissant comme pression de commande, et sur le côté opposé par la pression de la conduite de freinage de la remorque, alimentée par la soupape de commande de la remorque, l'extrémité (11) du poussoir (7) plongeant, dans le cas où la pression fait défaut, dans la conduite de freinage de la remorque et dans le cas du déplacement du piston (3) qui porte le poussoir (7) dans une section transversale de la conduite de réserve (13), dans le sens d'un étranglement ou de l'obturation de la conduite de réserve (13), caractérisée par le fait qu'entre l'extrémité du poussoir (7), qui est susceptible de plonger dans la section transversale de la conduite de réserve et le piston (3) porté par l'autre extrémité, est prévu un piston antagoniste (47) qui est guidé avec étanchéité sur la périphérie extérieure du poussoir et qui délimite, avec le piston (3) une chambre (55) reliée à l'atmosphère, le piston antagoniste (47) et le piston (3) étant susceptibles, par un rapprochement relatif entre eux, de venir mutuellement en contact, alors qu'il est prévu, sur le côté inférieur du piston antagoniste (47), une chambre (49) dans laquelle règne la pression ajustée par la soupape de commande de la remorque, la réalisation étant telle que lors de la charge en pression par la pression de commande et après éxecution d'un déplacement forcé, le piston (3) vient en contact avec le piston antagoniste (47) qui est susceptible d'être chargé par la pression ajustée et qui se déplace vers ledit piston (3).

6. Valve de contrôle selon la revendication 5, caractérisée par le fait qu'entre le piston (3) et le piston antagoniste (47) est prévu un dispositif à ressort (53) captif, à l'encontre duquel le piston (3) est déplaçable.
